# EUROPEAN PATENT SPECIFICATION

(11) **EP 3 002 576 B1**
(45) Date of publication and mention of the grant of the patent: **20.02.2019**
(21) Application number: 14464009.1
(22) Date of filing: 30.09.2014
(51) Int. Cl.: G01M 1/28

(54) **Method for detecting unbalance of a wheel, electronic control unit and storage medium**
Verfahren zur Erkennung einer Unwucht eines Rades, elektronische Steuerungseinheit und Speichermedium
Procédé permettant de détecter le déséquilibre d'une roue, unité de commande électronique et support de stockage

(43) Date of publication of application: 06.04.2016
(73) Proprietor: Continental Automotive GmbH, 30165 Hannover (DE)
(72) Inventor: Goron, Gabriel, 300003 Timisoara (RO); Lorincz, Zoltan, Bihor (RO); Pascu, Cosmin, Dumbravita (RO); Pela, Emanuel, 320110 Resita (RO); Podaru, Iulian, 300514 Timisoara (RO); Sabau, Sebastian, 300514 Timisoara (RO)

(56) References cited:
- KR-A- 20130 064 344
- US-B2- 7 497 146

## Description

The invention relates to a method for detecting unbalance of a wheel, to an electronic control unit being configured to perform such a method, and to a storage medium comprising code for performing such a method.

Unbalance of a wheel typically results in increased load of bearings or other components of a car. They may be recognized by vibrations. However, usually only experienced drivers are able to detect an unbalance of a wheel due to typical vibrations manually, because such vibrations are in most cases too small in order to be recognized by a driver given the plethora of other vibrations present in a car, for example due to an engine or due to road conditions. Patent application KR20130064344A discloses a wheel balance diagnosis method, but the method is only based on acceleration signals and acceleration sensor, and the detecting result is neither accurate nor reliable.

It is thus an object of the invention to provide a method for detecting unbalance of a wheel that can be performed automatically. It is a further object of the present invention to provide for an electronic control unit being configured to perform such a method. It is still a further object of the invention to provide for a storage medium comprising code to cause a processor to perform such a method.

This is achieved by a method according to claim 1, an electronic control unit according to claim 14 and a non-volatile computer-readable storage medium according to claim 15. Preferred embodiments can, for example, be derived from the respective dependent claims.

The invention relates to a method for detecting unbalance of a wheel, the method according to claim 1.

With the method according to the invention it is possible to detect an unbalance of a wheel automatically, wherein preferably sensors can be used that are already present in most cars. For example, sensors can be used that are commonly used in order to activate airbags or other restraint and security systems. With the measurement frequency having a predetermined relation to the rotational frequency, the method is more reliable and accurate.

The invention is especially based on the finding of the inventors that a rotational frequency of a wheel having an unbalance can be measured in a frequency spectrum that is recorded using typical acceleration sensors. It can in most cases be differentiated from other vibrations that are, for example, caused by an engine or by road conditions, because the rotational frequency is very well known and has other amplitude characteristics.

An unbalance can also be due to a flat or defective tire or rim, which can also be detected by the inventive method.

It should be noted that the rotational frequency of the wheel is typically an angular velocity of the wheel divided by 20. The rotational frequency is preferably measured by speed sensors that are also commonly present in most cars, for example in order to deliver information for safety systems like antilock brakes or electronic stability control.

The acceleration signal is preferably a signal that is measured by an acceleration sensor, for example by an acceleration sensor that is assigned to a suspension system of the vehicle.

The frequency spectrum can preferably be calculated using Fast Fourier Transformation (FFT). Such a frequency spectrum typically has a defined number of frequencies with corresponding amplitudes. However, it should be noted that also a continuous spectrum could be used, where discrete frequencies can be identified easily in the continuous spectrum.

The thresholds can be predetermined either in a way that a single threshold is applicable for all frequencies, or in a way that to each frequency there is assigned a separate, specific threshold. A threshold is usually given in a unit corresponding to a unit of the amplitudes. A threshold may also be dependent on other parameters like speed or temperature.

A predetermined relation is a relation, typically a mathematical relation, which describes how the measurement frequency or a number of measurement frequencies is or are related to the rotational frequency. The measurement frequencies are those that will be evaluated in order to detect unbalance of a wheel.

Preferably, the method is performed in an electronic control unit, especially in an airbag control unit or a chassis control unit. Such control units are typically already present in common cars and can thus be used in order to perform the inventive method, giving them a further useful function.

According to an implementation, the predetermined relation is such that the measurement frequency equals the rotational frequency. In this case, the rotational frequency is just taken as the measurement frequency, wherein it should be noted that discrete frequencies of the spectrums can be assigned as the measurement frequency, for example such that the nearest discrete frequency of the spectrum is assigned as the measurement frequency.

According to another implementation, the predetermined relation is such that the measurement frequency or a plurality of measurement frequencies have a distance from the rotational frequency that is less than a predetermined amount. Such a relation can be used in order to define frequencies of the frequency spectrum that have a certain maximum distance, i.e. the predetermined amount, to the rotational frequency.

According to another implementation, the predetermined relation is such that the measurement frequency has a predetermined positive or negative distance from the rotational frequency. Such a relation can be used in order to set a certain offset between measurement frequency and rotational frequency. For example, a known offset that is due to measurement or processing issues can be taken into account by such a relation.

According to a preferred implementation, the acceleration signal is determined by a number of acceleration sensors. Such acceleration sensors are typically already present in a car. Preferably, the acceleration sensors are part of a chassis control system. Such acceleration sensors are further preferably positioned at an upper side or at a lower side of a suspension element, the suspension element being assigned to the wheel. It has been determined that using such acceleration sensors of a chassis control system leads to a reliable implementation of the inventive method.

Preferably, some or all acceleration sensors have a maximum measurement range of 1 to 3 g, preferable 1.6 g. These are typical acceleration sensors that are especially present in high-end chassis control systems of luxury cars. They have a specifically high resolution in low g range. However, it should be noted that also acceleration sensors having a larger measurement range, for example having a measurement range of 16 g, can be used. Such acceleration sensors are typically present in most cars because they are used in order to control airbags or other safety systems.

According to a preferred implementation, unbalance is only detected if the amplitude corresponding to the measurement frequency exceeds the predetermined threshold for a predetermined amount of time. This can be used in order to prevent false detections of unbalance that are due to randomly occurred vibrations in a certain frequency range around the rotational frequency.

Preferably, the method further comprises a step of eliminating known interference signals from the frequency spectrum, especially before a step of comparing amplitudes to thresholds. For example, such interference signals could be due to an engine or due to road conditions. By such a step of eliminating, the reliability of the inventive method can be increased.

Preferably, at least signals originating from an engine are eliminated. Such signals can be predicted reliably, because a rotational frequency or revolution of an engine is typically known.

Preferably, the method further comprises a step of displaying a warning message if an unbalance is detected. Such a warning message can, for example, be displayed using a lamp or an electronic display. In addition or alternatively to that, a warning sound can be played. This can cause a driver to check the wheel and to drive to a service facility.

The invention further relates to an electronic control unit, especially incorporated in a vehicle, the electronic control unit being connected with a number of acceleration sensors and a number of speed sensors, and being configured to perform a method according to the invention.

With the electronic control unit, an inventive method can be preferably implemented. Such an electronic control unit can be a dedicated electronic control unit for performing the inventive method, or it can be an electronic control unit that also performs other tasks like control of a chassis or control of airbags or other security systems. The acceleration sensors and speed sensors are preferably used in order to determine parameters for performing the inventive method.

The electronic control unit can especially comprise processor means and storage means, wherein program code is stored in the storage means that causes the processor means to perform an inventive method.

Regarding the inventive method, all implementations and variations as discussed above can be applied. Discussed advantages apply accordingly.

The invention further relates to a non-volatile computer-readable storage medium comprising code to cause a processor to perform a method according to the invention. Regarding this method, all implementations and variations as discussed above can be used.

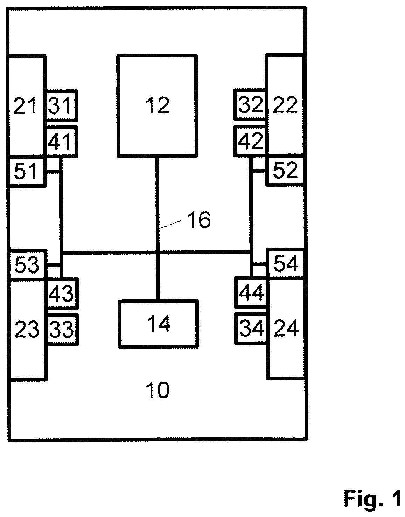

Further advantages and embodiments of the invention will be apparent from the following description of an embodiment given with reference to the enclosed drawing. Therein, fig. 1 shows schematically a vehicle comprising an electronic control unit.

Fig. 1 shows schematically a vehicle 10. The vehicle 10 comprises an engine 12, an electronic control unit 14 and a bus system 16 with which components of the vehicle 10 can communicate with each other.

The vehicle 10 comprises four wheels, in detail a first wheel 21, a second wheel 22, a third wheel 23 and a fourth wheel 24. To each of the wheels 21, 22, 23, 24 there is assigned a separate suspension element, the suspension elements together forming a suspension system. In detail, to the first wheel 21 there is assigned a first suspension element 31, to the second wheel 22 there is assigned a second suspension element 32, to the third wheel 23 there is assigned a third suspension element 33 and to the fourth wheel 24 there is assigned a fourth suspension element 34.

To each suspension element there is assigned an acceleration sensor. In detail, a first acceleration sensor 41 is assigned to the first suspension element 31, a second acceleration sensor 42 is assigned to the second suspension element 32, a third acceleration sensor 43 is assigned to the third suspension element 33 and a fourth acceleration sensor 44 is assigned to the fourth suspension element 34. The acceleration sensors 41, 42, 43, 44 each have a measurement range of 1.6 g, which is a comparatively low measurement range providing for a high resolution in low g range.

In addition, there is a number of speed sensors, wherein each speed sensor is assigned to one of the wheels. In detail, a first speed sensor 51 is assigned to the first wheel 21, a second speed sensor 52 is assigned to the second wheel 22, a third speed sensor 53 is assigned to the third wheel 23 and a fourth speed sensor 54 is assigned to the fourth wheel 24. The speed sensors 51, 52, 53, 54 are adapted to measure a respective rotational frequency of each of the wheels 21, 22, 23, 24.

The engine 12 and each of the sensors 41, 42, 43, 44, 51, 52, 53, 54 are connected via the bus system 16 to the electronic control unit 14. For each of the wheels 21, 22, 23, 24, the electronic control unit 14 continuously performs the following steps:
The respective current rotational frequency of the wheel is determined by output signals from the respective assigned speed sensor 51, 52, 53, 54. An acceleration signal is further measured using the respective assigned acceleration sensor 41, 42, 43, 44 of the respective wheel 21, 22, 23, 24. This acceleration signal is measured for a predetermined amount of time. Subsequently, a frequency spectrum of each of these acceleration signals is calculated using Fast Fourier Transformation (FFT), so that a respective frequency spectrum is generated, wherein a respective amplitude is assigned to each of a number of discrete frequencies. The electronic control unit 14 then determines for each of the frequency spectrums which of the discrete frequencies of the spectrum is nearest to the current rotational frequency of the respective wheel 21, 22, 23, 24. This nearest frequency of the discrete frequencies of the spectrum is defined as a measurement frequency. For each possible measurement frequency, there is a predetermined threshold stored in a storage medium of the electronic control unit 14. If the respective amplitude of the spectrum at the measurement frequency does not exceed this predetermined threshold, there is no unbalance detected. If the respective amplitude exceeds this threshold, an unbalance is detected and is reported to a driver by optical means. The optical means are not shown in Fig. 1.

In order to increase the reliability of a detection of an unbalance of one of the wheels 21, 22, 23, 24, a current revolution of the engine 12 is reported via the bus system 16 to the electronic control unit 14. If a predetermined threshold is exceeded just at a frequency corresponding to this revolution, indicating that the exceeding of the threshold could be due to vibrations caused by the engine 12, an unbalance is not detected. Consequently, a driver does not receive a signal alerting an unbalance in that case.

## Claims

1. Method for detecting unbalance of a wheel of a vehicle (21, 22, 23, 24),
comprising the steps:
- determining an acceleration signal,
- determining a rotational frequency of the wheel (21, 22, 23, 24),
- calculating a frequency spectrum of the acceleration signal, the frequency spectrum comprising a number of amplitudes, wherein each amplitude corresponds to a frequency, and **characterized in that** the method further comprises a step of
- detecting unbalance if an amplitude corresponding to a measurement frequency exceeds a predetermined threshold, the measurement frequency having a predetermined relation to the rotational frequency, wherein the measurement frequency has a predetermined positive or negative distance from the rotational frequency, wherein the predetermined relation is such that the measurement frequency or a plurality of measurement frequencies have a distance from the rotational frequency that is less than a predetermined amount, and wherein the acceleration signal is determined by acceleration sensors that are used to control airbags.

2. Method according to claim 1,
- **characterized in that** the method is performed in an electronic control unit (14), especially in an airbag control unit or a chassis control unit.

3. Method according to one of the preceding claims,
- **characterized in that** the predetermined relation is such that the measurement frequency equals the rotational frequency.

4. Method according to one of the preceding claims,
- **characterized in that** the predetermined relation is such that the measurement frequency or a plurality of measurement frequencies have a distance from the rotational frequency that is less than a predetermined amount.

5. Method according to one of the preceding claims,
- **characterized in that** the predetermined relation is such that the measurement frequency has a predetermined positive or negative distance from the rotational frequency.

6. Method according to one of the preceding claims,
- **characterized in that** the acceleration signal is determined by a number of acceleration sensors (41, 42, 43, 44).

7. Method according to claim 6,
- **characterized in that** the acceleration sensors (41, 42, 43, 44) are part of a chassis control system.

8. Method according to claim 6 or 7,
- **characterized in that** each acceleration sensor (41, 42, 43, 44) is positioned at an upper side or at a lower side of a suspension element (31, 32, 33, 34), the suspension element (31, 32, 33, 34) being assigned to the wheel (21, 22, 23, 24) .

9. Method according to one of the claims 6 to 8,
- **characterized in that** some or all acceleration sensors (41, 42, 43, 44) have a maximum measurement range of 1 to 3 g, preferably
1.6 g.

10. Method according to one of the preceding claims,
- **characterized in that** unbalance is only detected if the amplitude corresponding to the measurement frequency exceeds the predetermined threshold for a predetermined amount of time.

11. Method according to one of the preceding claims,
- **characterized in that** the method further comprises a step of eliminating known interfering signals from the frequency spectrum.

12. Method according to claim 11,
- **characterized in that** at least signals originating from an engine (12) are eliminated.

13. Method according to one of the preceding claims,
- **characterized in that** the method further comprises a step of displaying a warning message if an unbalance is detected.

14. Electronic control unit (14), especially incorporated in a vehicle (10), the electronic control unit (14) being connected with a number of acceleration sensors (41, 42, 43, 44) and a number of speed sensors (51, 52, 53, 54), and being configured to perform a method according to one of the preceding claims.

15. Non-volatile computer-readable storage medium comprising code to cause a processor to perform a method according to one of claims 1 to 13.

## Patentansprüche

1. Verfahren zur Erkennung einer Unwucht eines Rades eines Fahrzeugs (21, 22, 23, 24), das folgende Schritte umfasst:
- Erkennen eines Beschleunigungssignals,
- Erkennen einer Drehfrequenz des Rades (21, 22, 23, 24),
- Berechnen eines Frequenzspektrums des Beschleunigungssignals, wobei das Frequenzspektrum eine Anzahl von Amplituden umfasst, wobei jede Amplitude einer Frequenz entspricht, und **dadurch gekennzeichnet, dass** das Verfahren ferner einen Schritt des
- Erkennens einer Unwucht umfasst, wenn eine Amplitude, die einer Messfrequenz entspricht, eine vorbestimmte Schwelle überschreitet, wobei die Messfrequenz eine vorbestimmte Beziehung zu der Drehfrequenz aufweist, wobei die Messfrequenz einen vorbestimmten positiven oder negativen Abstand zu der Drehfrequenz aufweist, wobei die vorbestimmte Beziehung so ist, dass die Messfrequenz oder eine Vielzahl von Messfrequenzen einen Abstand zu der Drehfrequenz hat, der kleiner als ein vorbestimmter Betrag ist, und
wobei das Beschleunigungssignal durch Beschleunigungssensoren, die zur Steuerung von Airbags verwendet werden, bestimmt wird.

2. Verfahren nach Anspruch 1,
- **dadurch gekennzeichnet, dass** das Verfahren in einer elektronischen Steuereinheit (14) ausgeführt wird, insbesondere in einer Airbagsteuereinheit oder einer Fahrgestellsteuereinheit.

3. Verfahren nach einem der vorangehenden Ansprüche,
- **dadurch gekennzeichnet, dass** die vorbestimmte Beziehung so ist, dass die Messfrequenz der Drehfrequenz gleicht.

4. Verfahren nach einem der vorangehenden Ansprüche,
- **dadurch gekennzeichnet, dass** die vorbestimmte Beziehung so ist, dass die Messfrequenz oder eine Vielzahl von Messfrequenzen einen Abstand zu der Drehfrequenz hat, der kleiner als ein vorbestimmter Wert ist.

5. Verfahren nach einem der vorangehenden Ansprüche,
- **dadurch gekennzeichnet, dass** die vorbestimmte Beziehung so ist, dass die Messfrequenz einen vorbestimmten positiven oder negativen Abstand zu der Drehfrequenz hat.

6. Verfahren nach einem der vorangehenden Ansprüche,
- **dadurch gekennzeichnet, dass** das Beschleunigungssignal durch eine Anzahl von Beschleunigungssensoren (41, 42, 43, 44) bestimmt wird.

7. Verfahren nach Anspruch 6,
- **dadurch gekennzeichnet, dass** die Beschleunigungssensoren (41, 42, 43, 44) Teil eines Fahrgestellsteuerungssystems sind.

8. Verfahren nach Anspruch 6 oder 7,
- **dadurch gekennzeichnet, dass** jeder Beschleunigungssensor (41, 42, 43, 44) an einer oberen Seite oder an einer unteren Seite eines Aufhängungselements (31, 32, 33, 34) positioniert ist, wobei das Aufhängungselement (31, 32, 33, 34) dem Rad (21, 22, 23, 24) zugeordnet ist.

9. Verfahren nach einem der Ansprüche 6 bis 8,
- **dadurch gekennzeichnet, dass** einige oder alle Beschleunigungssensoren (41, 42, 43, 44) einen maximalen Messbereich von 1 bis 3 g haben, vorzugsweise 1,6 g.

10. Verfahren nach einem der vorangehenden Ansprüche,
- **dadurch gekennzeichnet, dass** die Unwucht nur erkannt wird, wenn die der Messfrequenz entsprechende Amplitude für einen vorbestimmten Betrag von Zeit die vorbestimmte Schwelle überschreitet.

11. Verfahren nach einem der vorangehenden Ansprüche,
- **dadurch gekennzeichnet, dass** das Verfahren ferner einen Schritt des Eliminierens bekannter Störsignale aus dem Frequenzspektrum umfasst.

12. Verfahren nach Anspruch 11,
- **dadurch gekennzeichnet, dass** mindestens Signale, die von einem Motor (12) ausgehen, eliminiert werden.

13. Verfahren nach einem der vorangehenden Ansprüche,
- **dadurch gekennzeichnet, dass** das Verfahren ferner einen Schritt des Anzeigens einer Warnmeldung umfasst, wenn eine Unwucht erkannt wird.

14. Elektronische Steuereinheit (14), insbesondere integriert in ein Fahrzeug (10), wobei die elektronische Steuereinheit (14) mit einer Anzahl von Beschleunigungssensoren (41, 42, 43, 44) und einer Anzahl von Geschwindigkeitssensoren (51, 52, 53, 54) verbunden ist und dazu ausgelegt ist, ein Verfahren nach einem der vorangehenden Ansprüche auszuführen.

15. Nicht flüchtiges, rechnerlesbares Speichermedium, das Code umfasst, um einen Prozessor zu veranlassen, ein Verfahren nach einem der Ansprüche 1 bis 13 auszuführen.

## Revendications

1. Procédé pour détecter un déséquilibre d'une roue d'un véhicule (21, 22, 23, 24), comprenant les étapes consistant :
- à déterminer un signal d'accélération,
- à déterminer une fréquence de rotation de la roue (21, 22, 23, 24),
- à calculer un spectre de fréquence du signal d'accélération, le spectre de fréquence comprenant un certain nombre d'amplitudes, dans lequel chaque amplitude correspond à une fréquence, et **caractérisé en ce que** le procédé comprend en outre une étape consistant :
- à détecter un déséquilibre si une amplitude correspondant à une fréquence de mesure dépasse un seuil prédéterminé, la fréquence de mesure ayant une relation prédéterminée avec la fréquence de rotation, dans lequel la fréquence de mesure présente une distance positive ou négative prédéterminée par rapport à la fréquence de rotation, dans lequel la relation prédéterminée est telle que la fréquence de mesure ou une pluralité de fréquences de mesure présentent une distance par rapport à la fréquence de rotation qui est inférieure à une quantité prédéterminée, et
dans lequel le signal d'accélération est déterminé par des capteurs d'accélération qui sont utilisés pour commander des coussins de sécurité gonflables.

2. Procédé selon la revendication 1,
- **caractérisé en ce que** le procédé est réalisé dans une unité de commande électronique (14), spécialement dans une unité de commande de coussin de sécurité gonflable ou une unité de commande de châssis.

3. Procédé selon l'une des revendications précédentes,
- **caractérisé en ce que** la relation prédéterminée est telle que la fréquence de mesure est égale à la fréquence de rotation.

4. Procédé selon l'une des revendications précédentes,
- **caractérisé en ce que** la relation prédéterminée est telle que la fréquence de mesure ou une pluralité de fréquences de mesure présentent une distance par rapport à la fréquence de rotation qui est inférieure à une quantité prédéterminée.

5. Procédé selon l'une des revendications précédentes,
- **caractérisé en ce que** la relation prédéterminée est telle que la fréquence de mesure présente une distance positive ou négative prédéterminée par rapport à la fréquence de rotation.

6. Procédé selon l'une des revendications précédentes,
- **caractérisé en ce que** le signal d'accélération est déterminé par un certain nombre de capteurs d'accélération (41, 42, 43, 44).

7. Procédé selon la revendication 6,
- **caractérisé en ce que** les capteurs d'accélération (41, 42, 43, 44) font partie d'un système de commande de châssis.

8. Procédé selon la revendication 6 ou 7,
- **caractérisé en ce que** chaque capteur d'accélération (41, 42, 43, 44) est positionné sur un côté supérieur ou sur un côté inférieur d'un élément de suspension (31, 32, 33, 34), l'élément de suspension (31, 32, 33, 34) étant attribué à la roue (21, 22, 23, 24).

9. Procédé selon l'une des revendications 6 à 8,
- **caractérisé en ce qu'**une partie ou la totalité des capteurs d'accélération (41, 42, 43, 44) présentent une plage de mesure maximale allant de 1 à 3 g, de préférence de 1,6 g.

10. Procédé selon l'une des revendications précédentes,
- **caractérisé en ce qu'**un déséquilibre est seulement détecté si l'amplitude correspondant à la fréquence de mesure dépasse le seuil prédéterminé pendant une période de temps prédéterminée.

11. Procédé selon l'une des revendications précédentes,
- **caractérisé en ce que** le procédé comprend en outre une étape consistant à éliminer des signaux parasites connus du spectre de fréquence.

12. Procédé selon la revendication 11,
- **caractérisé en ce qu'**au moins des signaux provenant d'un moteur (12) sont éliminés.

13. Procédé selon l'une des revendications précédentes,
- **caractérisé en ce que** le procédé comprend en outre une étape consistant à afficher un message d'avertissement si un déséquilibre est détecté.

14. Unité de commande électronique (14), spécialement incorporée dans un véhicule (10), l'unité de commande électronique (14) étant raccordée à un certain nombre de capteurs d'accélération (41, 42, 43, 44) et à un certain nombre de capteurs de vitesse (51, 52, 53, 54) et étant configurée pour réaliser un procédé selon l'une des revendications précédentes.

15. Support de stockage non volatil lisible par ordinateur comprenant un code pour amener un processeur à réaliser un procédé selon l'une des revendications 1 à 13.
